# EUROPEAN PATENT APPLICATION

(11) **EP 3 388 274 A1**
(43) Date of publication of application: **17.10.2018**
(21) Application number: 15910109.6
(22) Date of filing: 15.12.2015
(51) Int. Cl.: B60K 17/12

(54) **VEHICLE BIAXIAL PARALLEL ELECTRIC DRIVE SYSTEM AND GEAR SHIFTING CONTROL METHOD THEREOF**

(30) Priority: 11.12.2015 CN 201510920670
(71) Applicant: Nanjing Yueboo Power System Co., Ltd., Nanjing, Jiangsu 210019 (CN)
(72) Inventor: LI, Zhanjiang, Nanjing Jiangsu 210019 (CN); GAO, Chao, Nanjing Jiangsu 210019 (CN); LI, Xiang, Nanjing Jiangsu 210019 (CN); LI, Yanhui, Nanjing Jiangsu 210019 (CN)
(74) Representative: D'Halleweyn, Nele Veerle Trees Gertrudis
(86) International application number: PCT/CN2015/097496
(87) International publication number: WO 2017/096635

(57) **Abstract**

A vehicle biaxial parallel electric drive system and a gear shifting control method thereof. The drive system comprises a drive motor I (1), a drive motor II (15), and an automated mechanical transmission. The automated mechanical transmission comprises a first-gear gear pair (3, 7), a second-gear gear pair (13, 7), a third-gear gear pair (5, 8), a fourth-gear gear pair (10, 8), an engaging sleeve I (4), an engaging sleeve II (12), a transmission input shaft I (6), a transmission input shaft II (11), and a transmission output shaft III (9). The drive system comprises drive motors and an automated mechanical transmission, is simple in structure and reasonably arranged, has high acceleration and gradeability, and implements smooth gear shifting, without any power interruption. By using the gear shifting control method, the continuity of generation of power required for driving can be ensured in a gear shifting process. In addition, kinetic energy ensured during a vehicle traveling process can be converted to electric energy during a braking process, thereby reducing the losses of electric energy, so that the battery costs are reduced and the driving range of the vehicle is improved.

## Description

The present disclosure claims the priority to Chinese Patent Application No. 201510920670.X, titled "VEHICLE BIAXIAL PARALLEL ELECTRIC DRIVE SYSTEM AND GEAR SHIFTING CONTROL METHOD THEREOF", filed on December 11, 2015 with the State Intellectual Property Office of People's Republic of China, which is incorporated herein by reference in its entirety.

### TECHNICAL FIELD

The present disclosure relates to the technical field of transmission of electric vehicle, and in particular, to a vehicle biaxial parallel electric driving system and a gear-shifting control method thereof.

### BACKGROUND

In 21th century, environmental protection and energy saving are critical issues for the whole world. The Chinese government has proposed a basic national policy of establishing a conservation-minded society and an industry policy of encouraging development of energy-saving vehicle with small displacement. The electric vehicle is one of important approaches for such objective.

At present, pure-electric driving systems in the market include a traditional driving system with a multi-gear transmission apparatus and a clutch, a driving system with a multi-gear transmission apparatus and without a clutch, a driving system with two independent electric driving motors and a fixed-gear transmission apparatus with a drive shaft, and a driving system with an electric driving motor and a primary retarder transmission apparatus. The multi-gear transmission apparatus and the traditional driving system have a good accelerating performance, and have power interruption during gear-shifting. The driving system with a multi-gear transmission apparatus and without a clutch has high transmission efficiency without power interruption. The driving system with an electric driving motor and a primary retarder transmission apparatus can achieve stepless transmission, but have a poor accelerating performance and climbing ability because an efficiency of the electric driving motor is not fully developed.

In addition, demands on power are different for vehicles in accelerating driving stage, in low-speed driving stage, and in high-speed driving stage. With a single electric driving motor, it is difficult for the motor to always operate in high-efficiency region, resulting in waste of electric power.

### SUMMARY

To address the drawback of the conventional technology, a vehicle biaxial parallel electric driving system is provided according to the present disclosure. The driving system includes an electric driving motor and an electric-controlled mechanical automatic transmission, and has a simple structure, a reasonable arrangement, a good acceleration performance, a good climbing ability, and a smooth gear-shifting without power interruption. Power required in driving is kept to be generated during gear-shifting, and kinetic energy generated in vehicle traveling can converted into electric power during braking, which reduces loss of electric power, thereby reducing a cost of a battery and increasing cruising range of the vehicle.

The present disclosure is implemented by following technical solutions.

A vehicle biaxial parallel electric driving system includes an electric driving motor I, an electric driving motor II, and an electric-controlled mechanical automatic transmission, where the electric-controlled mechanical automatic transmission includes a first-gear cogwheel pair formed by a cogwheel I and a cogwheel III which are engaged, a second-gear cogwheel pair formed by a cogwheel V and the cogwheel III which are engaged, a third-gear cogwheel pair formed by a cogwheel II and a cogwheel IV which are engaged, a fourth-gear cogwheel pair formed by a cogwheel VI and the cogwheel IV which are engaged, an coupling sleeve I, an coupling sleeve II, a transmission input shaft I, a transmission input shaft II, and a transmission output shaft III. The cogwheel I and the cogwheel II are both freely sleeved on the transmission shaft I. The cogwheel III and the cogwheel IV are fixedly connected to the transmission output shaft III. The cogwheel V and the cogwheel VI are both freely sleeved on the transmission shaft II. An output shaft of the electric driving motor I is connected to the transmission input shaft I. An output shaft of the electric driving motor II is connected to the transmission input shaft II. The coupling sleeve I is sleeved on the transmission input shaft I and arranged between the cogwheel I and the cogwheel II. The coupling sleeve I is coupleable with and separatable from the cogwheel I and the cogwheel II. The coupling sleeve II is sleeved on the transmission input shaft II and arranged between the cogwheel V and the cogwheel VI, and the coupling sleeve II is coupleable with and separatable from the cogwheel V and the cogwheel VI.

A gear-shifting control method of the vehicle biaxial parallel electric driving system is provided according to the present disclosure. Three gears are provided by the power output shaft of the electric driving motor I and the power output shaft of the electric driving motor II, shifting between the three gears is implemented by coupling of the electric driving motor I and the electric driving motor II with the electric-controlled mechanical automatic transmission and drive by the electric driving motor I and the electric driving motor II, under a condition that a battery is sufficiently charged. The three gears are a double-electric-motor low speed gear, a double-electric-motor intermediate speed gear, and a double-electric-motor high speed gear.

Preferably, controlling the vehicle biaxial parallel electric driving system to operate at the double-electric-motor low speed gear, at least includes: coupling the coupling sleeve I with the cogwheel I, to fixedly connect the cogwheel I to the transmission input shaft I; and coupling the coupling sleeve II with the cogwheel V, to fixedly connect the cogwheel V to the transmission input shaft II. The electric driving motor I and the electric driving motor II have a same rotating speed and a same rotating direction, and in such case, a path of power transmission is that power outputted by the electric driving motor I, after passing the output shaft of the electric driving motor I, the transmission input shaft I, the coupling sleeve I, the cogwheel I and the cogwheel III, is outputted by the transmission output shaft III, and power outputted by the electric driving motor II, after passing the output shaft of the electric driving motor II, the transmission input shaft II, the coupling sleeve II, the cogwheel V and the cogwheel III, is outputted by the transmission output shaft III.

Preferably, controlling the vehicle biaxial parallel electric driving system to operate at the double-electric-motor intermediate speed gear at least includes: regulating a rotating speed of the electric driving motor I, and when the rotating speed of the electric driving motor I is the same as a rotating speed of the electric driving motor II, coupling the coupling sleeve I with the cogwheel II, to fixedly connect the cogwheel II to the transmission input shaft I; and separating the coupling sleeve I from the cogwheel I, to idle the cogwheel I; where a path of power transmission is that power outputted by the electric driving motor I, after passing the output shaft of the electric driving motor I, the transmission input shaft I, the coupling sleeve I, the cogwheel I and the cogwheel IV, is outputted by the transmission output shaft III; coupling the coupling sleeve II with the cogwheel V, to fixedly connect the cogwheel V to the transmission input shaft II; and separating the coupling sleeve II from the cogwheel VI, to idle the cogwheel VI; where a path of power transmission is that power outputted by the electric driving motor II, after passing the output shaft of the electric driving motor II, the transmission input shaft II, the coupling sleeve II, the cogwheel V and the cogwheel III, is outputted by the transmission output shaft III.

Preferably, controlling the vehicle biaxial parallel electric driving system to operate at the double-electric-motor high speed gear at least includes: coupling the coupling sleeve I with the cogwheel II, to fixedly connect the cogwheel II to the transmission input shaft I; separating the coupling sleeve I from the cogwheel I, to idle the cogwheel I; coupling the coupling sleeve II with the cogwheel VI, to fixedly connect the cogwheel VI to the transmission input shaft II; and separating the coupling sleeve II from the cogwheel V, to idle the cogwheel V; where the electric driving motor I and the electric driving motor II have a same rotating speed and a same rotating direction, and a path of power transmission is that power outputted by the electric driving motor I, after passing the output shaft of the electric driving motor I, the transmission input shaft I, the coupling sleeve I, the cogwheel II and the cogwheel IV, is outputted by the transmission output shaft III, and power outputted by the electric driving motor II after passing the output shaft of the electric driving motor II, the transmission input shaft II, the coupling sleeve II, the cogwheel VI and the cogwheel IV, is outputted by the transmission output shaft III.

Preferably, shifting the vehicle biaxial parallel electric driving system from the double-electric-motor low speed gear to the double-electric-motor high speed gear, at least includes:
step 1, shifting the vehicle biaxial parallel electric driving system from the double-electric-motor low speed gear to a state that only the electric driving motor I operates at a low speed gear, where the coupling sleeve I is separated from the cogwheel II to idle the cogwheel II, and a path of power transmission of the electric driving motor I is that power outputted by the electric driving motor I, after passing the output shaft of the electric driving motor I, the transmission input shaft I, the coupling sleeve I, the cogwheel I and the cogwheel III, is outputted by the transmission output shaft III;
step 2, shifting from the state that only the electric driving motor I operates at the low speed gear to a state that both the electric driving motor I and the electric driving motor II operate at the low speed gear, where a rotating speed of the electric driving motor II is regulated, and when the rotating speed of the electric driving motor II is the same as a rotating speed of the transmission output shaft II, the coupling sleeve II is coupled with the cogwheel V, to fixedly connect the cogwheel V to the transmission input shaft II, and in such case, the path of power transmission of the electric driving motor I is that the power outputted by the electric driving motor I, after passing the output shaft of the electric driving motor I, the transmission input shaft I, the coupling sleeve I, the cogwheel I and the cogwheel III, is outputted by the transmission output shaft III, and a path of power transmission of the electric driving motor II is that power outputted by the electric driving motor II after passing the output shaft of the electric driving motor II, the transmission input shaft II, the coupling sleeve II, the cogwheel V and the cogwheel III, is outputted by the transmission output shaft III;
step 3, shifting from the state that both the electric driving motor I and the electric driving motor II operate at the low speed gear to a state that only the electric driving motor II operates at the low speed gear, where the coupling sleeve I is separated from the cogwheel I, to idle the cogwheel I, and in such case, the path of power transmission of the electric driving motor II is that the power outputted by the electric driving motor II, after passing the output shaft of the electric driving motor II, the transmission input shaft II, the coupling sleeve II, the cogwheel V and the cogwheel III, is outputted by the transmission output shaft III;
step 4, shifting from the state that only the electric driving motor II operates at the low speed gear to the double-electric-motor intermediate speed gear, where the rotating speed of the electric driving motor I is regulated, and when the rotating speed of the electric driving motor II is the same as the rotating speed of the electric driving motor II, the coupling sleeve I is coupled with the cogwheel II, to fixedly connect the cogwheel II to the transmission input shaft I, and in such case, the path of power transmission of the electric driving motor I is that the power outputted by the electric driving motor I, after passing the output shaft of the electric driving motor I, the transmission input shaft I, the coupling sleeve I, the cogwheel II and the cogwheel IV, is outputted by the transmission output shaft III, and the path of power transmission of the electric driving motor II is that the power outputted by the electric driving motor II after passing the output shaft of the electric driving motor II, the transmission input shaft II, the coupling sleeve II, the cogwheel V and the cogwheel III, is outputted by the transmission output shaft III;
step 5, shifting the electric driving motor I and the electric driving motor II from the double-electric-motor intermediate speed gear to a state that only the electric driving motor I operates at a high speed gear, where the coupling sleeve II is separated from the cogwheel V, to idle the cogwheel V, and in such case, the path of power transmission of the electric driving motor I is that the power outputted by the electric driving motor I, after passing the output shaft of the electric driving motor I, the transmission input shaft I, the coupling sleeve I, the cogwheel II and the cogwheel IV, is outputted by the transmission output shaft III; and
step 6, shifting from the state that only the electric driving motor I operates at the high speed gear to the double-electric-motor high speed gear, where the rotating speed of the electric driving motor II is regulated, and when the rotating speed of the electric driving motor II is the same as the rotating speed of the electric driving motor I, the coupling sleeve II is coupled with the cogwheel VI, to fixedly connect the cogwheel VI to the transmission input shaft II, and in such case, the path of power transmission of the electric driving motor I is that the power outputted by the electric driving motor I after passing the output shaft of the electric driving motor I, the transmission input shaft I, the coupling sleeve I, the cogwheel II and the cogwheel IV, is outputted by the transmission output shaft III, and the path of power transmission of the electric driving motor II is that the power outputted by the electric driving motor II after passing the output shaft of the electric driving motor II, the transmission input shaft II, the coupling sleeve II, the cogwheel VI and the cogwheel IV, is outputted by the transmission output shaft III.

Preferably, shifting the vehicle biaxial parallel electric driving system shifts from the double-electric-motor high speed gear to the double-electric-motor low speed gear at least includes:
step 1, shifting the vehicle biaxial parallel electric driving system from the double-electric-motor high speed gear to a state that only the electric driving motor I operates at a high speed gear, where the coupling sleeve II is separated from the cogwheel VI, to idle the cogwheel VI, and in such case, a path of power transmission of the electric driving motor I is that power outputted by the electric driving motor I, after passing the output shaft of the electric driving motor I, the transmission input shaft I, the coupling sleeve I, the cogwheel II and the cogwheel IV, is outputted by the transmission output shaft III;
step 2, shifting from the state that only the electric driving motor I operates at the high speed gear to the double-electric-motor intermediate speed gear, where the coupling sleeve II is coupled with the cogwheel V, to fixedly connect the cogwheel V to the transmission input shaft II, and in such case, the path of power transmission of the electric driving motor I is that the power outputted by the electric driving motor I after passing the output shaft of the electric driving motor I, the transmission input shaft I, the coupling sleeve I, the cogwheel II and the cogwheel IV, is outputted by the transmission output shaft III, and a path of power transmission of the electric driving motor II is that power outputted by the electric driving motor II, after passing the output shaft of the electric driving motor II, the transmission input shaft II, the coupling sleeve II, the cogwheel V and the cogwheel III, is outputted by the transmission output shaft III;
step 3, shifting the electric driving motor I and the electric driving motor II from the double-electric-motor intermediate speed gear to a state that only the electric driving motor II operates at a low speed gear, where the coupling sleeve I is separated from the cogwheel II, to idle the cogwheel II, and the path of power transmission of the electric driving motor II is that the power outputted by the electric driving motor II, after passing the output shaft of the electric driving motor II, the transmission input shaft II, the coupling sleeve II, the cogwheel V and the cogwheel III, is outputted by the transmission output shaft III; and
step 4, shifting from the state that only the electric driving motor II operates at the low speed gear to a state that both the electric driving motor I and the electric driving motor II operate at the low speed gear, where the coupling sleeve I is coupled with the cogwheel I, to fixedly connect the cogwheel I to the transmission input shaft I, and in such case, the path of power transmission of the electric driving motor I is that the power outputted by the electric driving motor I, after passing the output shaft of the electric driving motor I, the transmission input shaft I, the coupling sleeve I, the cogwheel I and the cogwheel III, is outputted by the transmission output shaft III, and the path of power transmission of the electric driving motor II is that the power outputted by the electric driving motor II after passing the output shaft of the electric driving motor II, the transmission input shaft II, the coupling sleeve II, the cogwheel V and the cogwheel III, is outputted by the transmission output shaft III.

Preferably, the gear-shifting control method further includes a reverse-gear control method, which at least includes: rotating reversely, by the electric driving motor I which is the only electric driving motor operating in a case of reverse-gear, coupling the coupling sleeve I and the cogwheel I, to fixedly connect the cogwheel I to the transmission input shaft; separating the coupling sleeve I from the cogwheel II, to idle the cogwheel II; and at the same time, separating the coupling sleeve II from both the cogwheel V and the cogwheel VI; where a path of power transmission of the electric driving motor I is that the power outputted from the electric driving motor I, after passing the output shaft of the electric driving motor I, the transmission input shaft I, the coupling sleeve I, the cogwheel I and the cogwheel II, and outputted by the transmission output shaft III.

Preferably, in a case of operating at the double-electric-motor low speed gear, the double-electric-motor intermediate speed gear, or the double-electric-motor high speed gear, steps of the gear-shifting control method of the vehicle biaxial parallel electric driving system includes:
in a case that a vehicle is driven at a mode of the double-electric-motor low speed gear, braking via a braking pedal, where in such case, a path of power transmission is that after power inputted by the braking pedal passes the transmission shaft III and the cogwheel III sequentially, a part of the power inputted by the braking pedal passes the cogwheel I, the coupling sleeve I, and the transmission input shaft I, to drive the electric driving motor I to generate electricity, and the other part of the power inputted by the braking pedal passes the cogwheel V, the coupling sleeve II, and the transmission input shaft II, to drive the electric driving motor II to generate electricity; and shifting to mechanical brake when the battery is fully charged;
in a case that the vehicle is driven at a mode of the double-electric-motor intermediate speed gear, braking via a braking pedal, where in such case, a path of power transmission is that after power inputted by the braking pedal passes the transmission shaft III, a part of the power inputted by the braking pedal passes the cogwheel IV, the cogwheel II, the coupling sleeve I, and the transmission input shaft I, to drive the electric driving motor I to generate electricity, and the other part of the power inputted by the braking pedal passes the cogwheel III, the cogwheel V, the coupling sleeve II, and the transmission input shaft II, to drive the electric driving motor II to generate electricity; and shifting to mechanical brake when the battery is fully charged; and
in a case that the vehicle is driven at a mode of the double-electric-motor high speed gear, braking via a braking pedal, where in such case, a path of power transmission is that after power inputted by the braking pedal passes the transmission shaft III and the cogwheel IV, a part of the power inputted by the braking pedal passes the cogwheel II, the coupling sleeve I, and the transmission input shaft I, to drive the electric driving motor I to generate electricity, and the other part of the power inputted by the braking pedal passes the cogwheel VI, the coupling sleeve II, and the transmission input shaft II, to drive the electric driving motor II to generate electricity; and shifting to mechanical brake when the battery is fully charged.

Compared with conventional technology, advantages of the present disclosure are as follows.
(1) The vehicle biaxial parallel electric driving system can use a high-efficiency region of the electric driving motors efficiently, has no power interruption during gear-shifting, and has a good climbing and accelerating performance, a simple structure, and a low cost.
(2) The electric-controlled mechanical automatic transmission has the three gears, which improves the accelerating performance and the climbing performance of the vehicle, deploys output power reasonably, and makes the best use of electric power, thereby achieving an objective of energy saving, environment protection and low usage cost.
(3) Two electric motors are employed to drive, and shifting between single-electric-motor operation and double-electric-motor operation makes the electric driving motor always operate in the high-efficiency region, no matter the vehicle is at a low-speed working condition, an intermediate-speed working condition or a high-speed working condition, which prevents power waste.
(4) The electric driving motor I is capable of rotating forward and reversely. The vehicle is backed by reverse rotation of the electric driving motor at the reverse-gear, and in such case, the electric driving motor II may not operate.
(5) Braking energy is recovered in braking. The recovered energy is outputted to the electric driving motor, and inputted by the braking operation of traveling wheels of the vehicle. The electric driving motor switches from a driving state to a power generating state. The energy is transmitted from the wheel to the electric driving motor, which recovers the braking energy, reduces energy loss of the battery, reduces a cost of the battery, and improves cruising range of the electric driving motor.

### BRIEF DESCRIPTION OF THE DRAWINGS

Figure 1 is a schematic structural diagram of a vehicle biaxial parallel electric driving system according to the present disclosure;
Figure 2 is a diagram of a path of power transmission in a case that the vehicle biaxial parallel electric driving system in Figure 1 is at a double-electric-motor low speed gear;
Figure 3 is a diagram of a path of power transmission in a case that the vehicle biaxial parallel electric driving system in Figure 1 is at a double-electric-motor intermediate speed gear;
Figure 4 is a diagram of a path of power transmission in a case that the vehicle biaxial parallel electric driving system in Figure 1 is at a double-electric-motor high speed gear;
Figure 5a is a diagram of a path of power transmission in a case that only an electric driving motor I of the vehicle biaxial parallel electric driving system in Figure 1 operates at a low speed gear;
Figure 5b is a diagram of a path of power transmission in a case that only an electric driving motor II of the vehicle biaxial parallel electric driving system in Figure 1 operates at a low speed gear;
Figure 5c is a diagram of a path of power transmission in a case that only an electric driving motor I of the vehicle biaxial parallel electric driving system in Figure 1 operates at a high speed gear;
Figure 6 is a diagram of a path of power transmission in a case that the vehicle biaxial parallel electric driving system in Figure 1 is at a reverse gear;
Figure 7 is a diagram of a path of power transmission in a case that the vehicle biaxial parallel electric driving system in Figure 1 is at a double-electric-motor low speed gear;
Figure 8 is a diagram of a path of power transmission in a case that the vehicle biaxial parallel electric driving system in Figure 1 is at a double-electric-motor intermediate speed gear;
Figure 9 is a diagram of a path of power transmission in a case that the vehicle biaxial parallel electric driving system in Figure 1 is at a double-electric-motor high speed gear;

Reference signs:

| | |
|---|---|
| 1: electric driving motor I; | 2: output shaft of the electric driving motor I |
| 3: cogwheel I; | 4: coupling sleeve I; |
| 5: cogwheel II; | 6: transmission input shaft I; |
| 7: cogwheel III; | 8: cogwheel IV; |
| 9: transmission output shaft III; | 10: cogwheel VI; |
| 11: transmission input shaftII; | 12: coupling sleeve II; |
| 13: cogwheel V; | 14: output shaft of the electric driving motor II; |
| 15: electric driving motor II. | |

### DETAILED DESCRIPTION OF THE EMBODIMENTS

Hereinafter specific embodiments of the present disclosure are further illustrated in detail in conjunction with the drawings.

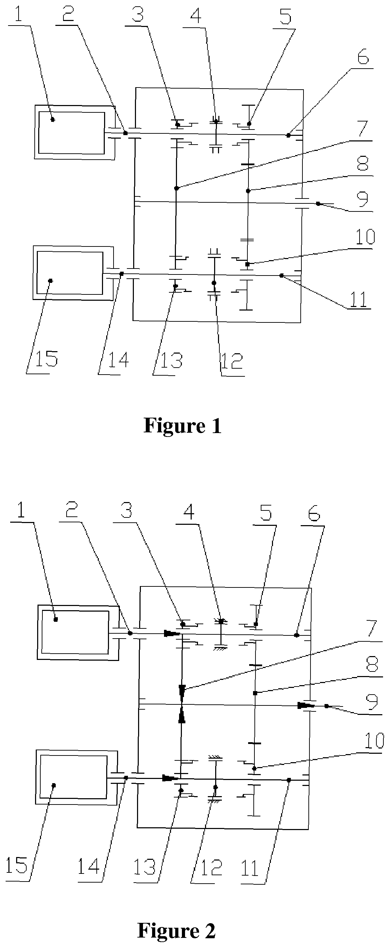

As shown in Figure 1, a vehicle biaxial parallel electric driving system according to the present disclosure includes two electric driving motors and a power output end. The electric driving motors are an electric driving motor I 1 and an electric driving motor II 15, and the power output end is an electric-controlled mechanical automatic transmission. The electric-controlled mechanical automatic transmission includes a first-gear cogwheel pair formed by a cogwheel I 3 and a cogwheel III 7 which are engaged, a second-gear cogwheel pair formed by a cogwheel V 13 and the cogwheel III 7 which are engaged, a third-gear cogwheel pair formed by a cogwheel II 5 and a cogwheel IV 8 which are engaged, a fourth-gear cogwheel pair formed by a cogwheel VI 10 and the cogwheel IV 8 which are engaged, an coupling sleeve I 4, an coupling sleeve II 12, a transmission input shaft I 6, a transmission input shaft II 11, and a transmission output shaft III 9. The cogwheel I 3 and the cogwheel II 5 are both freely sleeved on the transmission shaft I 6. The cogwheel III 7 and the cogwheel IV 8 are fixedly connected to the transmission output shaft III 9. The cogwheel V 13 and the cogwheel VI 10 are both freely sleeved on the transmission shaft II 11. An output shaft 2 of the electric driving motor I is connected to the transmission input shaft I 6. An output shaft 14 of the electric driving motor II is connected to the transmission input shaft II 11. The coupling sleeve I 4 is sleeved on the transmission input shaft I 6 and arranged between the cogwheel I 3 and the cogwheel II 5. The coupling sleeve I 4 is coupleable with and separatable from the cogwheel I 3 and the cogwheel II 5. The coupling sleeve II 12 is sleeved on the transmission input shaft II 11 and arranged between the cogwheel V 13 and the cogwheel VI 10. The coupling sleeve II 12 is coupleable with and separatable from the cogwheel V 13 and the cogwheel VI 10. Thereby, it is achieved to regulate rotating speeds of the electric driving motor I 1 and the electric driving motor II 14, and to shift gears of the electric-controlled mechanical automatic transmission.

A gear-shifting control method of the vehicle biaxial parallel electric driving system is provided according to the present disclosure. In the vehicle biaxial parallel electric driving system, three gears are provided by the power output shaft of the electric driving motor I 1 and the power output shaft of the electric driving motor II 15. Shifting between the three gears is implemented by coupling of the electric driving motors I 1 and II 15 with the electric-controlled mechanical automatic transmission and drive by the electric driving motor I 1 and the electric driving motor II 15, under a condition that a battery is sufficiently charged. The three gears include a double-electric-motor low speed gear, a double-electric-motor intermediate speed gear, and a double-electric-motor high speed gear. Each of the electric driving motor I 1 and the electric driving motor II 15 can also operate alone, to meet a practical requirement of the electric driving motors.

The control method of the vehicle biaxial parallel electric driving system at the double-electric-motor low speed gear, the double-electric-motor intermediate speed gear, and the double-electric-motor high speed gear are as follows.

As shown in Figure 2, the vehicle biaxial parallel electric driving system is controlled to operate at the double-electric-motor low speed gear by the following method. The coupling sleeve I 4 is coupled with the cogwheel I 3 , to fixedly connect the cogwheel I 3 to the transmission input shaft I 6. The coupling sleeve II 12 is coupled with the cogwheel V 13, to fixedly connect the cogwheel V 13 to the transmission input shaft II 11. The electric driving motor I and the electric driving motor II have a same rotating speed and a same rotating direction. In such case, a path of power transmission is that power outputted by the electric driving motor I 1, after passing the output shaft 2 of the electric driving motor I, the transmission input shaft I 6, the coupling sleeve I 4, the cogwheel I 3 and the cogwheel III 7, is outputted by the transmission output shaft III 9, and power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9.

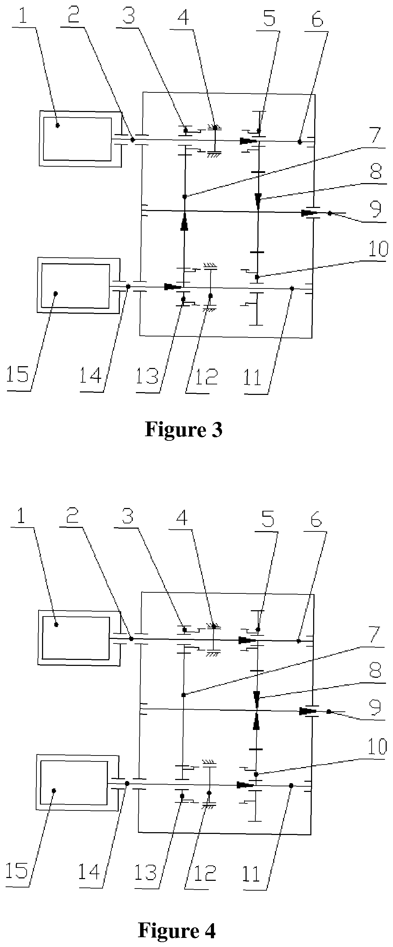

As shown in Figure 3, the vehicle biaxial parallel electric driving system is controlled to operate at the double-electric-motor intermediate speed gear by the following method. A rotating speed of the electric driving motor I 1 is regulated. When the rotating speed of the electric driving motor I 1 is the same as a rotating speed of the electric driving motor II 15, the coupling sleeve I 4 is coupled with the cogwheel II 5, to fixedly connect the cogwheel II 5 to the transmission input shaft I 6. The coupling sleeve I 4 is separated from the cogwheel I 3, to idle the cogwheel I 3. In such case, a path of power transmission is that power outputted by the electric driving motor I 1, after passing the output shaft 2 of the electric driving motor I, the transmission input shaft I 6, the coupling sleeve I 4, the cogwheel II 5 and the cogwheel IV 8, is outputted by the transmission output shaft III 9. The coupling sleeve II 12 is coupled with the cogwheel V 13, to fixedly connect the cogwheel V 13 to the transmission input shaft II 11. The coupling sleeve II 12 is separated from the cogwheel VI 10, to idle the cogwheel VI 10. In such case, a path of power transmission is that power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9.

As shown in Figure 4, the vehicle biaxial parallel electric driving system is controlled to operate at the double-electric-motor high speed gear by the following method. The coupling sleeve I 4 is coupled with the cogwheel II 5, to fixedly connect the cogwheel II 5 to the transmission input shaft I 6. The coupling sleeve I 4 is separated from the cogwheel I 3, to idle the cogwheel I 3. The coupling sleeve II 12 is coupled with the cogwheel VI 10, to fixedly connect the cogwheel VI 10 to the transmission input shaft II 11. The coupling sleeve II 12 is separated from the cogwheel V 13, to idle the cogwheel V 13. The electric driving motor I 1 and the electric driving motor II 15 have a same rotating speed and a same rotating direction. In such case, a path of power transmission is that power outputted by the electric driving motor I 1, after passing the output shaft 2 of the electric driving motor I, the transmission input shaft I 6, the engaging sleeve I 4, the cogwheel II 5 and the cogwheel IV 8, is outputted by the transmission output shaft III 9, and power outputted by the electric driving motor II 15 after passing the output shaft 14 of the electric driving motor II, the transmission input shaft II 11, the coupling sleeve II 12, the cogwheel VI 10 and the cogwheel IV 8, is outputted by the transmission output shaft III 9.

In a case that the vehicle biaxial parallel electric driving system according to the present disclosure is at the double-electric-motor low speed gear, the double-electric-motor intermediate speed gear, or the double-electric-motor high speed gear, the gear-shifting control method is as follows.

First, in a gear-shifting method of the vehicle biaxial parallel electric driving system from the double-electric-motor low speed gear to the double-electric-motor high speed gear, the vehicle biaxial parallel electric driving system experiences transitions from a state that only the electric driving motor I 1 operates at a low speed gear, to a state that both the electric driving motor I 1 and the electric driving motor II 15 operate at the low speed gear, then to a state that only the electric driving motor II 15 operates at a low speed gear, then to the double-electric-motor intermediate speed gear, and at last to a state that only the electric driving motor I 1 operates at a high speed gear, which include the following steps 1 to 6 in detail.

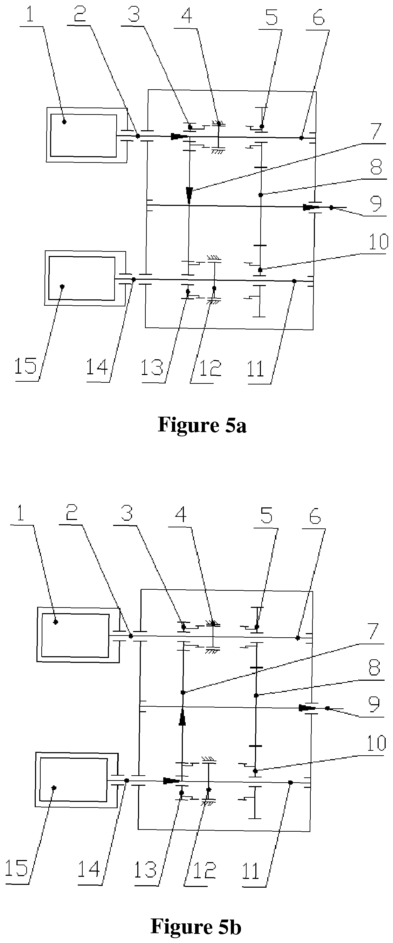

In step 1, the vehicle biaxial parallel electric driving system is shifted from the double-electric-motor low speed gear to a state that only the electric driving motor I 1 operates at the low speed gear, where the coupling sleeve I 4 is separated from the cogwheel II 5 to idle the cogwheel II 5. A path of power transmission of the electric driving motor I 1 is that power outputted by the electric driving motor I 1, after passing the output shaft 2 of the electric driving motor I, the transmission input shaft I 6, the coupling sleeve I 4, the cogwheel I 3 and the cogwheel III 7, is outputted by the transmission output shaft III 9, as shown in Figure 5a.

In step 2, the system is shifted from the state that only the electric driving motor I 1 operates at the low speed gear to a state that both the electric driving motor I 1 and the electric driving motor II 15 operate at the low speed gear, where a rotating speed of the electric driving motor II 15 is regulated, and when the rotating speed of the electric driving motor II 15 is the same as a rotating speed of the transmission output shaft II, the coupling sleeve II 12 is coupled with the cogwheel V 13, to fixedly connect the cogwheel V 13 to the transmission input shaft II 11. In such case, the path of power transmission of the electric driving motor I 1 is that the power outputted by the electric driving motor I 1, after passing the output shaft 2 of the electric driving motor I, the transmission input shaft I 6, the coupling sleeve I 4, the cogwheel I 3 and the cogwheel III 7, is outputted by the transmission output shaft III 9, and a path of power transmission of the electric driving motor II 15 is that power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9, as shown in Figure 2.

In step 3, the system is shifted from the state that both the electric driving motor I 1 and the electric driving motor II 15 operate at the low speed gear to a state that only the electric driving motor II 15 operates at the low speed gear, where the coupling sleeve I 4 is separated from the cogwheel I 3, to idle the cogwheel I 3. In such case, the path of power transmission of the electric driving motor II 15 is that the power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9, as shown in Figure 5b.

In step 4, the system is shifted from the state that only the electric driving motor II 15 operates at the low speed gear to the double-electric-motor intermediate speed gear, where the rotating speed of the electric driving motor I 1 is regulated, and when the rotating speed of the electric driving motor II 15 is the same as the rotating speed of the electric driving motor II 15, the coupling sleeve I 4 is coupled with the cogwheel II 5, to fixedly connect the cogwheel II 5 to the transmission input shaft I 6. In such case, the path of power transmission of the electric driving motor I 1 is that the power outputted by the electric driving motor I 1, after passing the output shaft 2 of the electric driving motor I, the transmission input shaft I 6, the coupling sleeve I 4, the cogwheel II 5 and the cogwheel IV 8, is outputted by the transmission output shaft III 9, and the path of power transmission of the electric driving motor II 15 is that the power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9, as shown in Figure 3.

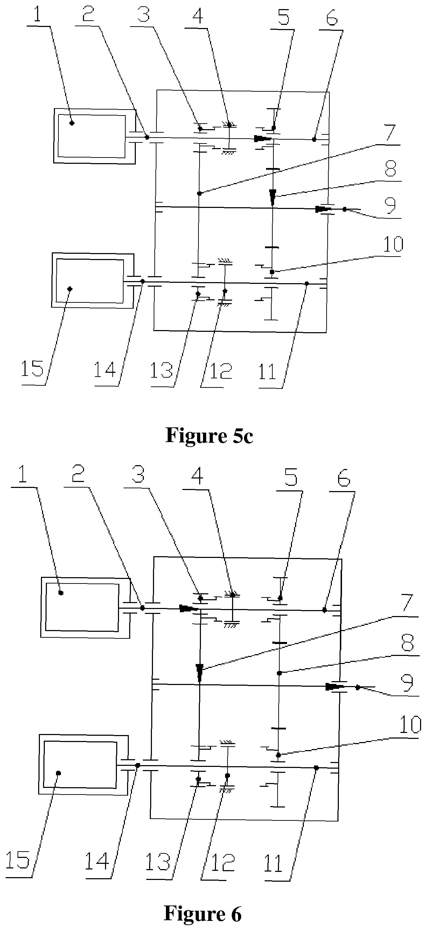

In step 5, the electric driving motor I 1 and the electric driving motor I 15 are shifted from the double-electric-motor intermediate speed gear to a state that only the electric driving motor I 1 operates at the high speed gear, where the coupling sleeve II 12 is separated from the cogwheel V 13, to idle the cogwheel V 13. In such case, the path of power transmission of the electric driving motor I 1 is that the power outputted by the electric driving motor I 1, after passing the output shaft 2 of the electric driving motor I, the transmission input shaft I 6, the coupling sleeve I 4, the cogwheel II 5 and the cogwheel IV 8, is outputted by the transmission output shaft III 9, as shown in Figure 5c.

In step 6, the system is shifted from the state that only the electric driving motor I 1 operates at the high speed gear to the double-electric-motor high speed gear, where the rotating speed of the electric driving motor II 15 is regulated, and when the rotating speed of the electric driving motor II 15 is the same as the rotating speed of the electric driving motor I 1, the coupling sleeve II 12 is coupled with the cogwheel VI 10, to fixedly connect the cogwheel VI 10 to the transmission input shaft II 11. In such case, the path of power transmission of the electric driving motor I 1 is that the power outputted by the electric driving motor I 1, after passing the output shaft 2 of the electric driving motor I, the transmission input shaft I 6, the coupling sleeve I 4, the cogwheel II 5 and the cogwheel IV 8, is outputted by the transmission output shaft III 9, and the path of power transmission of the electric driving motor II 15 is that the power outputted by the electric driving motor II 15, after passing the output shaft 14 of the electric driving motor II, the transmission input shaft II 11, the coupling sleeve II 12, the cogwheel VI 10 and the cogwheel IV 8, is outputted by the transmission output shaft III 9, as shown in Figure 4.

Second, in a gear-shifting method of the vehicle biaxial parallel electric driving system from the double-electric-motor high speed gear to the double-electric-motor low speed gear, the vehicle biaxial parallel electric driving system experiences transitions from a state that only the electric driving motor I 1 operates at a high speed gear, to the double-electric-motor intermediate speed gear, and at last to the state that only the electric driving motor II 15 operates at a low speed gear, which include the following steps 1 to 4 in detail.

In step 1, the vehicle biaxial parallel electric driving system is shifted from the double-electric-motor high speed gear to a state that only the electric driving motor I 1 operates at the high speed gear, where the coupling sleeve II 12 is separated from the cogwheel VI 10, to idle the cogwheel VI 10. In such case, a path of power transmission of the electric driving motor I 1 is that power outputted by the electric driving motor I 1, after passing the output shaft of the electric driving motor I, the transmission input shaft I 6, the coupling sleeve I 4, the cogwheel II 5 and the cogwheel IV 8, is outputted by the transmission output shaft III 9, as shown in Figure 5c.

In step 2, the system is shifted from the state that only the electric driving motor I 1 operates at the high speed gear is shifted to the double-electric-motor intermediate speed gear, where the coupling sleeve II 12 is coupled with the cogwheel V 13, to fixedly connect the cogwheel V 13 to the transmission input shaft II 11. In such case, the path of power transmission of the electric driving motor I 1 is that the power outputted by the electric driving motor I 1, after passing the output shaft 2 of the electric driving motor I, the transmission input shaft I 6, the coupling sleeve I 4, the cogwheel II 5 and the cogwheel IV 8, is outputted by the transmission output shaft III 9, and a path of power transmission of the electric driving motor II 15 is that power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9, as shown in Figure 3.

In steps 3, the electric driving motor I1 and the electric driving motor II 15 are shifted from the double-electric-motor intermediate speed gear to a state that only the electric driving motor II 15 operates at the low speed gear, where the coupling sleeve I 4 is separated from the cogwheel II 5, to idle the cogwheel II 5. The path of power transmission of the electric driving motor II 15 is that the power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9, as shown in Figure 5b.

In step 4, the system is shifted from the state that only the electric driving motor II 15 operates at the low speed gear to a state that both the electric driving motor I 1 and the electric driving motor II 15 operate at the low speed gear, where the coupling sleeve I 4 is coupled with the cogwheel I 3, to fixedly connect the cogwheel I 3 to the transmission input shaft I 6. In such case, the path of power transmission of the electric driving motor I 1 is that the power outputted by the electric driving motor I 1, after passing the output shaft 2 of the electric driving motor I, the transmission input shaft I 6, the coupling sleeve I 4, the cogwheel I 3 and the cogwheel III 7, is outputted by the transmission output shaft III 9, and the path of power transmission of the electric driving motor II 15 is that the power outputted by the electric driving motor II 15, after passing the output shaft 14 of the electric driving motor II, the transmission input shaft II 11, the coupling sleeve II 12, the cogwheel V 13 and the cogwheel III 7, is outputted by the transmission output shaft III 9, as shown in Figure 2.

The gear-shifting control method of the vehicle biaxial parallel electric driving system further includes a reverse-gear control method, which includes the following steps. In a case of a reverse-gear, only the electric driving motor I 1 operates and rotates reversely, the coupling sleeve I 4 is coupled with the cogwheel I 3, to fixedly connect the cogwheel I 3 to the transmission input shaft I 6. The coupling sleeve I 4 is separated from the cogwheel II 5, to idle the cogwheel II 5. At the same time, the coupling sleeve II 12 is separated from both the cogwheel V 13 and the cogwheel VI 10. A path of power transmission of the electric driving motor I 1 output is the power outputted by the electric driving motor I 1, after passing the output shaft 2 of the electric driving motor I, the transmission input shaft I 6, the coupling sleeve I 4, the cogwheel I 3 and the cogwheel III 7, is outputted by the transmission output shaft III 9, as shown in Figure 6.

In a case of operating at the double-electric-motor low speed gear, the double-electric-motor intermediate speed gear, or the double-electric-motor high speed gear, the gear-shifting control method of the vehicle biaxial parallel electric driving system according to the present disclosure includes the following steps.

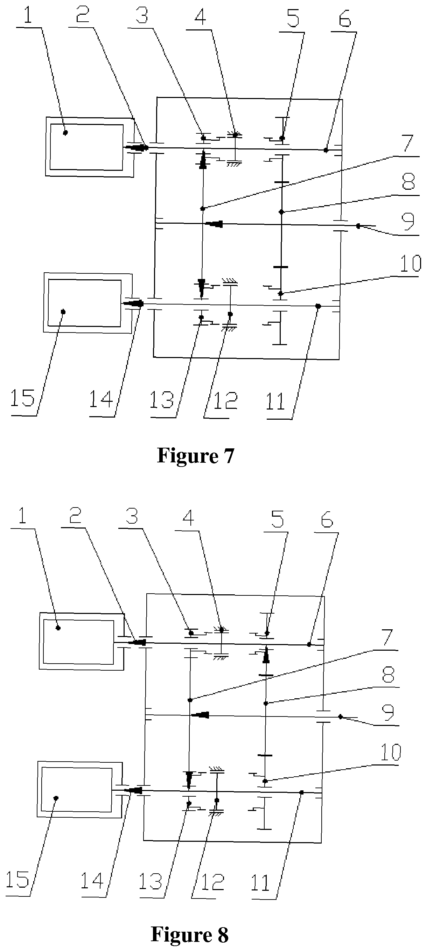

In a case that a vehicle is driven at a mode of the double-electric-motor low speed gear, the vehicle is braked via a braking pedal. In such case, a path of power transmission is that after power inputted by the braking pedal passes the transmission shaft III and the cogwheel III 7 sequentially, a part of the power inputted by the braking pedal passes the cogwheel I 3, the coupling sleeve I 4, and the transmission input shaft I 6, to drive the electric driving motor I 1 to generate electricity, and the other part of the power inputted by the braking pedal passes the cogwheel V 13, the coupling sleeve II 12, and the transmission input shaft II 11, to drive the electric driving motor II 15 to generate electricity, and it is shifted to mechanical brake when the battery is fully charged, as shown in Figure 7.

In a case that a vehicle is driven at a mode of the double-electric-motor intermediate speed gear, the vehicle is braked via a braking pedal. In such case, a path of power transmission is that after power inputted by the braking pedal passes the transmission shaft III, a part of the power inputted by the braking pedal passes the cogwheel IV 8, the cogwheel II 5, the coupling sleeve I 4, and the transmission input shaft I 6, to drive the electric driving motor I 1 to generate electricity, and the other part of the power inputted by the braking pedal passes the cogwheel III 7, the cogwheel V 13, the coupling sleeve II 12, and the transmission input shaft II 11, to drive the electric driving motor II 15 to generate electricity, and it is shifted to mechanical brake when the battery is fully charged, as shown in Figure 8.

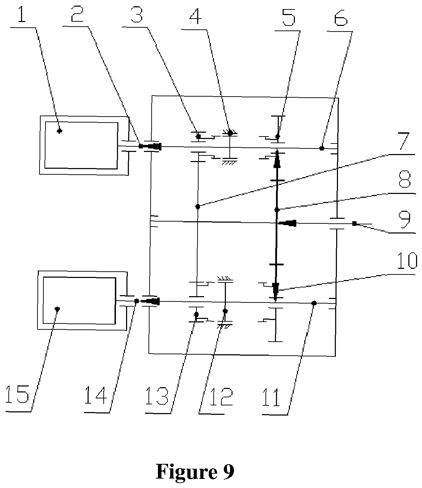

In a case that a vehicle is driven at a mode of the double-electric-motor high speed gear, the vehicle is braked via a braking pedal. In such case, a path of power transmission is that after power inputted by the braking pedal passes the transmission shaft III and the cogwheel IV 8 sequentially, a part of the power inputted by the braking pedal passes the cogwheel II 5, the coupling sleeve I 4, and the transmission input shaft I 6, to drive the electric driving motor I 1 to generate electricity, and the other part of the power inputted by the braking pedal passes the cogwheel VI 10, the coupling sleeve II 12, and the transmission input shaft II 11, to drive the electric driving motor II 15 to generate electricity, and it is shifted to mechanical brake when the battery is fully charged, as shown in Figure 9.

Because the three gears of the electric-controlled mechanical automatic transmission is designed based on speed-ratio optimization, operating efficiency of the electric motor is improved, having better overall power performance and economy performance than an electric vehicle with a single gear. In a case of driving in downtown, a requirement on power is low, and the vehicle biaxial parallel electric driving system can meet a requirement of the vehicle driving on a road in downtown, which includes starting, accelerating and climbing. The electric driving motor I 1 and the electric driving motor II 15 cooperates to shift gear, which can achieve no power interruption in gear-shifting, improving a quality of gear-shifting and driving smoothness. The forward and reverse rotation of the electric driving motor I 1 is changed by changing a direction of an input voltage. In particular, the vehicle drives backward in a case that the electric driving motor I 1 rotates reversely.

From the vehicle biaxial parallel electric driving system according to the present disclosure, it can be seen that by using an electric-controlled mechanical automatic transmission structure with high transmission efficiency, the two electric driving motors are coupled in power, the three gears are provided for power output of the electric driving motors, which meets a practical operational requirement on the electric driving motors. Via shifting among multiple operating modes, a speed performance and a high-efficiency region of the electric driving motor are efficiently improved. The vehicle biaxial parallel electric driving system according to the present disclosure has a simple structure and a low cost, and can achieve synchronous speed regulation and control without power interruption, improving the power performance and the economy performance of the vehicle.

The present disclosure is not limited to the aforementioned embodiments. Any variations, improvements and replacements made by those skilled in the art without deviating from the essential content of the present disclosure falls within the protection scope of the present disclosure.

### Industrial Applicability

The vehicle biaxial parallel electric driving system according to the present disclosure includes the electric driving motors and the electric-controlled mechanical automatic transmission, which has a simple structure, a reasonable arrangement, a good accelerating performance, a good claiming ability, and a smooth gear-shifting without power interruption. Power required in driving is kept to be generated during gear-shifting by the gear-shifting method, and kinetic energy generated in vehicle traveling can be converted into electric power during braking, which reduces loss of electric power, thereby reducing a cost of the battery and improving cruising range of the vehicle.

## Claims

1. A vehicle biaxial parallel electric driving system, comprising
an electric driving motor I, an electric driving motor II, and
an electric-controlled mechanical automatic transmission,
wherein the electric-controlled mechanical automatic transmission comprises a first-gear cogwheel pair formed by a cogwheel I and a cogwheel III which are engaged, a second-gear cogwheel pair formed by a cogwheel V and the cogwheel III which are engaged, a third-gear cogwheel pair formed by a cogwheel II and a cogwheel IV which are engaged, a fourth-gear cogwheel pair formed by a cogwheel VI and the cogwheel IV which are engaged, an coupling sleeve I, an coupling sleeve II, a transmission input shaft I, a transmission input shaft II, and a transmission output shaft III, and
wherein the cogwheel I and the cogwheel II are both freely sleeved on the transmission shaft I, the cogwheel III and the cogwheel IV are fixedly connected to the transmission output shaft III, the cogwheel V and the cogwheel VI are both freely sleeved on the transmission shaft II, an output shaft of the electric driving motor I is connected to the transmission input shaft I, an output shaft of the electric driving motor II is connected to the transmission input shaft II, the coupling sleeve I is sleeved on the transmission input shaft I and arranged between the cogwheel I and the cogwheel II, the coupling sleeve I is coupleable with and separatable from the cogwheel I and the cogwheel II, the coupling sleeve II is sleeved on the transmission input shaft II and arranged between the cogwheel V and the cogwheel VI, and the coupling sleeve II is coupleable with and separatable from the cogwheel V and the cogwheel VI.

2. A gear-shifting control method of a vehicle biaxial parallel electric driving system, comprising:
shifting between three gears provided by the power output shaft of the electric driving motor I and the power output shaft of the electric driving motor II by means of coupling of the electric driving motor I and the electric driving motor II with the electric-controlled mechanical automatic transmission and drive by the electric driving motor I and the electric driving motor II, under a condition that a battery is sufficiently charged, wherein the three gears are a double-electric-motor low speed gear, a double-electric-motor intermediate speed gear, and a double-electric-motor high speed gear.

3. The gear-shifting control method of the vehicle biaxial parallel electric driving system according to claim 2, wherein controlling the vehicle biaxial parallel electric driving system to operate at the double-electric-motor low speed gear at least comprises:
coupling the coupling sleeve I with the cogwheel I, to fixedly connect the cogwheel I to the transmission input shaft I; and
coupling the coupling sleeve II with the cogwheel V, to fixedly connect the cogwheel V to the transmission input shaft II; wherein
the electric driving motor I and the electric driving motor II have a same rotating speed and a same rotating direction, and a path of power transmission is that power outputted by the electric driving motor I, after passing the output shaft of the electric driving motor I, the transmission input shaft I, the coupling sleeve I, the cogwheel I and the cogwheel III, is outputted by the transmission output shaft III, and power outputted by the electric driving motor II, after passing the output shaft of the electric driving motor II, the transmission input shaft II, the coupling sleeve II, the cogwheel V and the cogwheel III, is outputted by the transmission output shaft III.

4. The gear-shifting control method of the vehicle biaxial parallel electric driving system according to claim 2, wherein controlling the vehicle biaxial parallel electric driving system to operate at the double-electric-motor intermediate speed gear at least comprises:
regulating a rotating speed of the electric driving motor I;
when the rotating speed of the electric driving motor I is the same as a rotating speed of the electric driving motor II, coupling the coupling sleeve I with the cogwheel II, to fixedly connect the cogwheel II to the transmission input shaft I; and separating the coupling sleeve I from the cogwheel I, to idle the cogwheel I, wherein a path of power transmission is that power outputted by the electric driving motor I, after passing the output shaft of the electric driving motor I, the transmission input shaft I, the coupling sleeve I, the cogwheel I and the cogwheel IV, is outputted by the transmission output shaft III; and
coupling the coupling sleeve II with the cogwheel V, to fixedly connect the cogwheel V to the transmission input shaft II; and separating the coupling sleeve II from the cogwheel VI, to idle the cogwheel VI, wherein a path of power transmission is that power outputted by the electric driving motor II, after passing the output shaft of the electric driving motor II, the transmission input shaft II, the coupling sleeve II, the cogwheel V and the cogwheel III, is outputted by the transmission output shaft III.

5. The gear-shifting control method of the vehicle biaxial parallel electric driving system according to claim 2, wherein controlling the vehicle biaxial parallel electric driving system to operate at the double-electric-motor high speed gear at least comprises:
coupling the coupling sleeve I with the cogwheel II, to fixedly connect the cogwheel II to the transmission input shaft I, and separating the coupling sleeve I from the cogwheel I, to idle the cogwheel I; and
coupling the coupling sleeve II with the cogwheel VI, to fixedly connect the cogwheel VI to the transmission input shaft II; and separating the coupling sleeve II from the cogwheel V, to idle the cogwheel V, wherein
the electric driving motor I and the electric driving motor II have a same rotating speed and a same rotating direction, and a path of power transmission is that power outputted by the electric driving motor I, after passing the output shaft of the electric driving motor I, the transmission input shaft I, the coupling sleeve I, the cogwheel II and the cogwheel IV, is outputted by the transmission output shaft III, and power outputted by the electric driving motor II, after passing the output shaft of the electric driving motor II, the transmission input shaft II, the coupling sleeve II, the cogwheel VI and the cogwheel IV, is outputted by the transmission output shaft III.

6. The gear-shifting control method of the vehicle biaxial parallel electric driving system according to claim 2, wherein shifting the vehicle biaxial parallel electric driving system from the double-electric-motor low speed gear to the double-electric-motor high speed gear at least comprises:
step 1, shifting the vehicle biaxial parallel electric driving system from the double-electric-motor low speed gear to a state that only the electric driving motor I operates at a low speed gear, wherein the coupling sleeve I is separated from the cogwheel II to idle the cogwheel II, and a path of power transmission of the electric driving motor I is that power outputted by the electric driving motor I, after passing the output shaft of the electric driving motor I, the transmission input shaft I, the coupling sleeve I, the cogwheel I and the cogwheel III, is outputted by the transmission output shaft III;
step 2, shifting from the state that only the electric driving motor I operates at the low speed gear to a state that both the electric driving motor I and the electric driving motor II operate at the low speed gear, wherein a rotating speed of the electric driving motor II is regulated, and when the rotating speed of the electric driving motor II is the same as a rotating speed of the transmission output shaft II, the coupling sleeve II is coupled with the cogwheel V, to fixedly connect the cogwheel V to the transmission input shaft II, wherein the path of power transmission of the electric driving motor I is that the power outputted by the electric driving motor I, after passing the output shaft of the electric driving motor I, the transmission input shaft I, the coupling sleeve I, the cogwheel I and the cogwheel III, is outputted by the transmission output shaft III, and a path of power transmission of the electric driving motor II is that power outputted by the electric driving motor II, after passing the output shaft of the electric driving motor II, the transmission input shaft II, the coupling sleeve II, the cogwheel V and the cogwheel III, is outputted by the transmission output shaft III;
step 3, shifting from the state that both the electric driving motor I and the electric driving motor II operate at the low speed gear to a state that only the electric driving motor II operates at the low speed gear, wherein the coupling sleeve I is separated from the cogwheel I, to idle the cogwheel I, and the path of power transmission of the electric driving motor II is that the power outputted by the electric driving motor II, after passing the output shaft of the electric driving motor II, the transmission input shaft II, the coupling sleeve II, the cogwheel V and the cogwheel III, is outputted by the transmission output shaft III;
step 4, shifting from the state that only the electric driving motor II operates at the low speed gear to the double-electric-motor intermediate speed gear, wherein the rotating speed of the electric driving motor I is regulated, and when the rotating speed of the electric driving motor II is the same as the rotating speed of the electric driving motor II, the coupling sleeve I is coupled with the cogwheel II, to fixedly connect the cogwheel II to the transmission input shaft I, the path of power transmission of the electric driving motor I is that the power outputted by the electric driving motor I, after passing the output shaft of the electric driving motor I, the transmission input shaft I, the coupling sleeve I, the cogwheel II and the cogwheel IV, is outputted by the transmission output shaft III, and the path of power transmission of the electric driving motor II is that the power outputted by the electric driving motor II, after passing the output shaft of the electric driving motor II, the transmission input shaft II, the coupling sleeve II, the cogwheel V and the cogwheel III, is outputted by the transmission output shaft III;
step 5, shifting the electric driving motor I and the electric driving motor II from the double-electric-motor intermediate speed gear to a state that only the electric driving motor I operates at a high speed gear, wherein the coupling sleeve II is separated from the cogwheel V, to idle the cogwheel V, and the path of power transmission of the electric driving motor I is that the power outputted by the electric driving motor I, after passing the output shaft of the electric driving motor I, the transmission input shaft I, the coupling sleeve I, the cogwheel II and the cogwheel IV, is outputted by the transmission output shaft III; and
step 6, shifting from the state that only the electric driving motor I operates at the high speed gear to the double-electric-motor high speed gear, wherein the rotating speed of the electric driving motor II is regulated, and when the rotating speed of the electric driving motor II is the same as the rotating speed of the electric driving motor I, the coupling sleeve II is coupled with the cogwheel VI, to fixedly connect the cogwheel VI to the transmission input shaft II, the path of power transmission of the electric driving motor I is that the power outputted by the electric driving motor I, after passing the output shaft of the electric driving motor I, the transmission input shaft I, the coupling sleeve I, the cogwheel II and the cogwheel IV, is outputted by the transmission output shaft III, and the path of power transmission of the electric driving motor II is that the power outputted by the electric driving motor II, after passing the output shaft of the electric driving motor II, the transmission input shaft II, the coupling sleeve II, the cogwheel VI and the cogwheel IV, is outputted by the transmission output shaft III.

7. The gear-shifting control method of the vehicle biaxial parallel electric driving system according to claim 2, wherein shifting the vehicle biaxial parallel electric driving system from the double-electric-motor high speed gear to the double-electric-motor low speed gear at least comprises:
step 1, shifting the vehicle biaxial parallel electric driving system from the double-electric-motor high speed gear to a state that only the electric driving motor I operates at a high speed gear, wherein the coupling sleeve II is separated from the cogwheel VI, to idle the cogwheel VI, and a path of power transmission of the electric driving motor I is that power outputted by the electric driving motor I, after passing the output shaft of the electric driving motor I, the transmission input shaft I, the coupling sleeve I, the cogwheel II and the cogwheel IV, is outputted by the transmission output shaft III;
step 2, shifting from the state that only the electric driving motor I operates at the high speed gear to the double-electric-motor intermediate speed gear, wherein the coupling sleeve II is coupled with the cogwheel V, to fixedly connect the cogwheel V to the transmission input shaft II, the path of power transmission of the electric driving motor I is that the power outputted by the electric driving motor I, after passing the output shaft of the electric driving motor I, the transmission input shaft I, the coupling sleeve I, the cogwheel II and the cogwheel IV, is outputted by the transmission output shaft III, and a path of power transmission of the electric driving motor II is that power outputted by the electric driving motor II, after passing the output shaft of the electric driving motor II, the transmission input shaft II, the coupling sleeve II, the cogwheel V and the cogwheel III, is outputted by the transmission output shaft III;
step 3, shifting the electric driving motor I and the electric driving motor II from the double-electric-motor intermediate speed gear to a state that only the electric driving motor II operates at a low speed gear, wherein the coupling sleeve I is separated from the cogwheel II, to idle the cogwheel II, and the path of power transmission of the electric driving motor II is that the power outputted by the electric driving motor II, after passing the output shaft of the electric driving motor II, the transmission input shaft II, the coupling sleeve II, the cogwheel V and the cogwheel III, is outputted by the transmission output shaft III; and
step 4, shifting from the state that only the electric driving motor II operates at the low speed gear to a state that both the electric driving motor I and the electric driving motor II operate at the low speed gear, wherein the coupling sleeve I is coupled with the cogwheel I, to fixedly connect the cogwheel I to the transmission input shaft I, the path of power transmission of the electric driving motor I is that the power outputted by the electric driving motor I, after passing the output shaft of the electric driving motor I, the transmission input shaft I, the coupling sleeve I, the cogwheel I and the cogwheel III, is outputted by the transmission output shaft III, and the path of power transmission of the electric driving motor II is that the power outputted by the electric driving motor II, after passing the output shaft of the electric driving motor II, the transmission input shaft II, the coupling sleeve II, the cogwheel V and the cogwheel III, is outputted by the transmission output shaft III.

8. The gear-shifting control method of the vehicle biaxial parallel electric driving system according to claim 2, further comprising a reverse-gear control method, at least comprising:
rotating reversely, by the electric driving motor I which is the only electric driving motor operating in a case of reverse-gear,
coupling the coupling sleeve I with the cogwheel I, to fixedly connect the cogwheel I to the transmission input shaft; and
separating the coupling sleeve I from the cogwheel II, to idle the cogwheel II, and at the same time separating the coupling sleeve II from both the cogwheel V and the cogwheel VI,
wherein a path of power transmission of the electric driving motor I is that the power outputted from the electric driving motor I, after passing the output shaft of the electric driving motor I, the transmission input shaft I, the coupling sleeve I, the cogwheel I and the cogwheel II, is outputted by the transmission output shaft III.

9. The gear-shifting control method of the vehicle biaxial parallel electric driving system according to claim 2, wherein in a case of operating at the double-electric-motor low speed gear, the double-electric-motor intermediate speed gear, or the double-electric-motor high speed gear, steps of the gear-shifting control method of the vehicle biaxial parallel electric driving system comprises:
in a case that a vehicle is driven at a mode of the double-electric-motor low speed gear, braking via a braking pedal, wherein a path of power transmission is that after power inputted by the braking pedal passes the transmission shaft III and the cogwheel III sequentially, a part of the power inputted by the braking pedal passes the cogwheel I, the coupling sleeve I, and the transmission input shaft I, to drive the electric driving motor I to generate electricity, and the other part of the power inputted by the braking pedal passes the cogwheel V, the coupling sleeve II, and the transmission input shaft II, to drive the electric driving motor II to generate electricity; and shifting to mechanical brake when the battery is fully charged;
in a case that the vehicle is driven at a mode of the double-electric-motor intermediate speed gear, braking via a braking pedal, wherein a path of power transmission is that after power inputted by the braking pedal passes the transmission shaft III, a part of the power inputted by the braking pedal passes the cogwheel IV, the cogwheel II, the coupling sleeve I, and the transmission input shaft I, to drive the electric driving motor I to generate electricity, and the other part of the power inputted by the braking pedal passes the cogwheel III, the cogwheel V, the coupling sleeve II, and the transmission input shaft II, to drive the electric driving motor II to generate electricity; and shifting to mechanical brake when the battery is fully charged; and
in a case that the vehicle is driven at a mode of the double-electric-motor high speed gear, braking via a braking pedal, wherein a path of power transmission is that after power inputted by the braking pedal passes the transmission shaft III and the cogwheel IV, a part of the power inputted by the braking pedal passes the cogwheel II, the coupling sleeve I, and the transmission input shaft I, to drive the electric driving motor I to generate electricity, and the other part of the power inputted by the braking pedal passes the cogwheel VI, the coupling sleeve II, and the transmission input shaft II, to drive the electric driving motor II to generate electricity; and shifting to mechanical brake when the battery is fully charged.
